# EUROPÄISCHE PATENTSCHRIFT

(11) **EP 1 788 268 B1**
(45) Veröffentlichungstag und Bekanntmachung des Hinweises auf die Patenterteilung: **04.05.2011**
(21) Anmeldenummer: 06019214.3
(22) Anmeldetag: 14.09.2006
(51) Int. Cl.: F16D 3/38

(54) **Fixierungsanordnung für Lagerbuchsen an einer Kreuzgelenkgabel**
Fixation assembly for a bearing ring on a fork of a universal joint
Ensemble de fixation pour une bague de roulement sur la fourchette d'un joint universel

(30) Priorität: 17.11.2005 DE 102005055397
(43) Veröffentlichungstag der Anmeldung: 23.05.2007
(73) Patentinhaber: Spicer Gelenkwellenbau GmbH, 45143 Essen (DE)
(72) Erfinder: Erlmann, Nikolaus Martin, 40213 Düsseldorf (DE); Stein, Thomas, 45128 Essen (DE)
(74) Vertreter: Harwardt, Günther

(56) Entgegenhaltungen:
- EP-A1- 1 431 604
- FR-A1- 2 568 962
- GB-A- 428 272
- US-A- 5 417 613

## Beschreibung

Die Erfindung betrifft eine Fixierungsanordnung für Lagerbuchsen an einer Kreuzgelenkgabel umfassend eine Kreuzgelenkgabel mit einer Gabelbasis, die eine Längsachse bildet, zwei Gabelarmen, die diametral von der Längsachse versetzt gleichgerichtet von der Gabelbasis vorstehen, jeweils eine durchgehende Lagerbohrung aufweisen, wobei die Lagerbohrungen beider Gabelarme auf einer gemeinsamen Bohrungsachse zentriert sind, welche die Längsachse rechtwinklig schneidet, jeweils an einer der Längsachse abgewandten Außenseite zur Gabelbasis hin versetzt, in einem Längsschnitt gesehen, der die Bohrungsachse enthält, und der Lagerbohrung zugewandt eine Kreisbogennut aufweisen, deren Zentrum auf der Bohrungsachse liegt oder von dieser zur Gabelbasis versetzt ist, ein separates Sicherungselement je Gabelarm, das einen Eingriffsabschnitt mit einem Außenumfang aufweist, der der Kreisbogennut angepasst ist und in diese eingreift.

Aus der DE 102 61 114 A1 sind verschiedene Fixieranordnungen für Lagerbuchsen an einer Kreuzgelenkgabel bekannt und umfassen eine Kreuzgelenkgabel mit einer Gabelbasis, die eine Längsachse bildet. Von dieser stehen zwei Gabelarme vor. Sie sind diametral von der Längsachse versetzt gleichgerichtet von der Gabelbasis vorstehend angeordnet. Jeder Gabelarm weist eine durchgehende Lagerbohrung auf, wobei die Lagerbohrungen beider Gabelarme auf einer gemeinsamen Bohrungsachse zentriert sind, welche die Längsachse rechtwinklig schneidet. Jeweils an einer der Längsachse abgewandten Außenseite weisen die Gabelarme zur Gabelbasis hin versetzt, in einem Längsschnitt gesehen, der die Bohrungsachse enthält, und der Lagerbohrung zugewandt eine Kreisbogennut auf. Das Zentrum der Kreisbogennut liegt auf der Bohrungsachse. Die Lagerbuchse umfasst einen Buchsenboden und eine Umfangswand. Sie wird in der Lagerbohrung eines Gabelarmes aufgenommen, wobei der Buchsenboden zur Außenseite weist. Auf seiner Außenseite weist der Buchsenboden einen über die Lagerbohrung nach außen vorstehenden Zapfen auf, der mit einer umlaufenden Nut versehen ist, deren Mittelpunkt auf der Bohrungsachse liegt. Es ist ein Sicherungselement vorgesehen, das als nierenförmiger Bügel gestaltet ist und zwei zueinander federnde Abschnitte aufweist, von denen der Außenabschnitt in die Kreisbogennut eingreift und der innere Abschnitt in die Nut des Zapfens am Buchsenboden eingreift. Alternativ ist ein Sicherungselement in Form eines Sicherungsblechs vorgesehen, das einen Außenumfang aufweist, der der Kreisbogennut angepasst ist und in diese mit einem Eingriffsabschnitt eingreift. Ferner weist dieses Sicherungselement eine Durchgangsbohrung auf, durch die eine Schraube in eine zentrale Bohrung des Buchsenbodens eingeschraubt werden kann. Alternativ ist ein blechförmiges Sicherungselement mit einem Außenumfang, der der Kreisbogennut angepasst ist und mit einer zentralen Durchgangsbohrung versehen ist, vorgeschlagen, wobei ein am Buchsenboden angeordneter Zapfen durch diese Bohrung hindurchtritt. Das Sicherungselement ist durch einen Sicherungsring, der in eine Nut des Zapfens am Buchsenboden eingreift, in seiner Lage gesichert. Zusätzlich können bei allen Ausführungsformen an den Umfangsenden der Kreisbogennut Anschläge vorgesehen sein, die das Sicherungselement gegen Drehen sichern.

Die beschriebenen Sicherungsausbildungen erfordern Maßnahmen und Bearbeitungsschritte sowohl an der Kreuzgelenkgabel als auch an der Lagerbuchse, um vor dem Ende der Gabelarme, das der Gabelbasis entfernt ist, eine Reduzierung des Rotationsdurchmessers der Kreuzgelenkgabel bei montierten Lagerbuchsen zu ermöglichen.

Die DE 35 27 053 A1 betrifft Kreuzgelenkwellen mit 2 Mitnehmern, die durch ein Zapfenkreuz verbunden sind. Die Lagerbuchsen werden gegen Verdrehung und axiale Verschiebung durch ein als Passfeder dienendes Teil, das mit der Lagerbuchse drehfest verbunden ist und mit einer entsprechenden Aussparung mit einem angrenzenden Teils des Mitnehmers zusammenarbeitet, sowie durch einen Sicherungsring, der mit einer in den Mitnehmer eingearbeiteten Ringnut zusammenarbeitet, gesichert. Die Druckschriften US 5 417 613 A und GB 428 272 A betreffen ebenfalls Ausgestaltungen an Kreuzgelenkwellen, welche ein Verdrehen und axiales Verschieben der Lagerbuchse verhindern.

Der Erfindung liegt die Aufgabe zugrunde, eine Fixierungsanordnung für Lagerbuchsen an einer Kreuzgelenkgabel vorzuschlagen, bei der das Sicherungselement einfach zu montieren ist.

Gelöst wird diese Aufgabe erfindungsgemäß durch die Gegenstände der unabhängigen Patentansprüche.

Eine Fixierungsanordnung für Lagerbuchsen an einer Kreuzgelenkgabel wird nachfolgend beschrieben, jedoch nicht beansprucht, die dadurch gekennzeichnet ist, dass
- eine Kreuzgelenkgabel mit
   - einer Gabelbasis, die eine Längsachse bildet,
   - zwei Gabelarmen, die
      - diametral von der Längsachse versetzt gleichgerichtet von der Gabelbasis vorstehen,
      - jeweils eine durchgehende Lagerbohrung aufweisen, wobei die Lagerbohrungen beider Gabelarme auf einer gemeinsamen Bohrungsachse zentriert sind, welche die Längsachse rechtwinklig schneidet,
      - jeweils an einer der Längsachse abgewandten Außenseite zur Gabelbasis hin versetzt, in einem Längsschnitt gesehen, der die Bohrungsachse enthält, und der Lagerbohrung zugewandt eine Kreisbogennut aufweisen,
   - ein separates Sicherungselement je Gabelarm, das
      - einen Eingriffsabschnitt mit einem Außenumfang aufweist, der der Kreisbogennut angepasst ist und in diese eingreift.

Von Vorteil bei dieser Anordnung ist, dass der Buchsenboden auch über einen erheblichen Teil in Richtung zu der Gabelbasis hin frei von daran angebrachten oder sich an diesem abstützenden Bauteilen gestaltet werden kann.

In Ausgestaltung dieser ersten, nicht beanspruchten Ausführungsform ist vorgesehen, dass eine Sicherungsausnehmung zur Gabelbasis hin vorgesehen ist, die ausgehend von der Lagerbohrung hinterschnitten ist und ausgehend von dieser einen Durchlass bildet, und dass das Sicherungselement scheibenartig ausgebildet ist und mit seinem Sicherungsabschnitt formschlüssig in der Sicherungsausnehmung festgelegt ist, wodurch die Sicherungsmittel gebildet sind. Durch diese Anordnung werden eine Drehsicherung und auch eine Auszugssicherung für die Sicherungselemente bereitgestellt. Die Montage ist einfach. Dies ist insbesondere der Fall, wenn vorgesehen ist, dass der Sicherungsabschnitt quer zur Bohrungsachse federnd ausgebildet ist und von der Lagerbohrung ausgehend durch den Durchlass in die Sicherungsausnehmung einfederbar ist.

Alternativ hierzu ist es möglich, dass der Sicherungsabschnitt so bemessen ist, dass er durch den Durchlass in die Sicherungsausnehmung ohne Formänderung, also frei einführbar ist, dass der Sicherungsabschnitt eine Durchgangsbohrung aufweist, durch die ein Werkzeug zur Vergrößerung des Sicherungsabschnitts einführbar ist, durch welches der Sicherungsabschnitt auf eine Abmessung größer als der Durchlass vergrößerbar ist. Hierdurch wird eine bleibende Sicherung erreicht. Das Lösen dieser Sicherung ist nur durch Zerstörung möglich, so dass insbesondere dort, wo kein Austausch der Lagerbuchsen möglich sein oder Fachwerkstätten vorbehalten bleiben soll, eine solche Ausführungsform günstig ist.

Dabei ist die Sicherungsausnehmung über ihren Umfang zumindest teilweise kreiszylindrisch ausgebildet. Sie weist eine Achse auf, die parallel zur Bohrungsachse verläuft. Die federnde Gestaltung kann dadurch erreicht werden, dass der Sicherungsabschnitt einen Schlitz aufweist.

Alternativ ist eine Sicherungsausnehmung zur Gabelbasis hin vorgesehen, die ausgehend von der Lagerbohrung hinterschnittfrei gestaltet ist. Dafür ist vorgesehen, dass das Sicherungselement scheibenartig ausgebildet ist und einen zur Sicherungsausnehmung passend ausgebildeten Sicherungsabschnitt aufweist und mit diesem von der Lagerbohrung ausgehend in die Sicherungsausnehmung eingreift. Um in einem solchen Fall das Sicherungselement verliersicher anzubringen, ist vorgesehen, dass der Sicherungsabschnitt eine Durchgangsbohrung aufweist, durch die eine Schraube, die in eine an die Sicherungsausnehmung anschließende Gewindebohrung eingreift, hindurchgeführt ist, wodurch die Sicherungsmittel gebildet sind. In einem solchen Fall ist es jedoch auch möglich, dass die Sicherungsausnehmung und/oder die Lagerbuchse eine Haltekante bildet und dass der Sicherungsabschnitt eine Nase aufweist, die die Haltekante ausgehend von der Lagerbohrung hintergreift, wodurch die Sicherungsmittel gebildet sind. Beide Lösungen bieten neben der Drehsicherung eine Auszugsicherung für das Sicherungselement.

Anstelle nur einen Sicherungsabschnitt vorzusehen, ist es auch möglich, dass das Sicherungselement scheibenförmig ausgebildet ist und an beiden Enden des Eingriffsabschnitts Sicherungsabschnitte in Form von Haltevorsprüngen aufweist, die jeweils in eine entsprechende Sicherungsausnehmung an der Außenseite des zugehörigen Gabelarms eingreifen und die Sicherungsmittel bilden.

Gelöst wird die der Erfindung zugrundeliegende Aufgabe auch durch eine Fixierungsanordnung für Lagerbuchsen an einer Kreuzgelenkgabel die dadurch gekennzeichnet ist, dass
- das Zentrum der Kreisbogennut auf der Bohrungsachse liegt oder von dieser zur Gabelbasis hin versetzt ist,
- die Gabelarme jeweils mindestens einen Sicherungsanschlag an der Außenseite aufweisen, der von einer gedachten Ebene, auf der die Längsachse senkrecht steht und welche die Bohrungsachse enthält, in Richtung von der Gabelbasis weg versetzt ist,
- jedes Sicherungselement je Sicherungsanschlag einen Sicherungsabschnitt
aufweist, der sich am Sicherungsanschlag abstützt.

Dabei treten auch die Vorteile ein, die im Zusammenhang mit der ersten, nicht beanspruchten Lösung genannt wurden.

Für eine erste Ausführungsform dieser erfindungsgemäßen Lösung ist vorgesehen, dass der Sicherungsabschnitt des Sicherungselements in Form eines Vorsprunges ausgebildet ist, der in Richtung von der Gabelbasis weg den zugehörigen Sicherungsanschlag hintergreift und dass dem Sicherungsanschlag eine Stützfläche vorgeschaltet ist, die dem Verlauf der Kreisbogennut über die gedachte Ebene hinaus bis zum Sicherungsanschlag folgt. In Ausgestaltung dieses Vorschlags ist vorgesehen, dass der Sicherungsanschlag durch eine von der Lagerbohrung weggerichtete Stufenfläche gebildet ist.

Alternativ hierzu ist vorgesehen, dass das Sicherungselement an die Enden seines der Kreisbogennut angepassten Abschnitts seines Außenumfangs anschließend Verlängerungsabschnitte aufweist, die parallel zur Längsachse verlaufende Stützkanten bilden, welche sich an den die Sicherungsanschläge darstellenden und zur Längsachse parallelen und auf die Enden der Kreisbogennut folgenden Flächen abstützen.

Eine dritte Lösung der Aufgabe, die nicht beansprucht wird, sieht eine Fixierungsanordnung für Lagerbuchsen an einer Kreuzgelenkgabel vor, die dadurch gekennzeichnet ist, dass
- das Sicherungselement scheibenartig ausgebildet ist,
- das Sicherungselement an den Umfangsenden abgewinkelte Haltevorsprünge aufweist, die sich an Anlageflächen des die Kreisbogennut aufweisenden Außenseitenabschnitts abstützen und sich ferner an dem Umfang der Lagerbuchsen in einem Bereich, der, von der Gabelbasis aus gesehen, vor einer Ebene liegt, die die Bohrungsachse enthält und auf der die Längsachse senkrecht steht, abstützen.

Drei Lösungen der der Erfindung zugrundeliegenden Aufgabe und Varianten hierzu sind in der Zeichnung dargestellt und anhand derselben näher erläutert.

Es zeigt
- Figur 1: einen Halblängsschnitt durch eine Kreuzgelenkgabel mit einer ersten nicht beanspruchten Fixierungsanordnung,
- Figur 2: eine Draufsicht zu Figur 1,
- Figur 3: eine Draufsicht auf ein Sicherungselement zur Verwendung im Zusam- menhang mit der Ausführung nach Figuren 1 und 2 als Einzelteil,
- Figur 4: einen Halblängsschnitt einer Kreuzgelenkgabel mit einer Fixierungsan- ordnung gemäß einer alternativen Ausführungsform zu der gemäß Fi- guren 1 bis 3,
- Figur 5: eine Draufsicht zu Figur 4,
- Figur 6: das zugehörige Sicherungselement in Draufsicht als Einzelteil,
- Figur 7: einen Schnitt VII-VII gemäß Figur 5 für das in Figur 4 eingekreiste De- tail X,
- Figur 8: einen Halblängsschnitt einer Kreuzgelenkgabel mit einer weiteren Fixie- rungsanordnung, bei der ein Sicherungselement durch eine Schraube in einer Sicherungsausnehmung festgelegt ist,
- Figur 9: eine Draufsicht zu Figur 8,
- Figur 10: eine Draufsicht auf das Sicherungselement als Einzelteil,
- Figur 11: im vergrößerten Maßstab das Detail X von Figur 8,
- Figur 12: einen Halblängsschnitt einer weiteren Variante einer Fixierungsanord- nung mit hinterschnittfreier Sicherungsausnehmung,
- Figur 13: eine Draufsicht zu Figur 12,
- Figur 14: ein den Sicherungsabschnitt des Sicherungselements, das bei der Aus- führungsform gemäß Figuren 12 und 13 benutzt wird, darstellendes vergrößertes Detail, vor der Montage,
- Figur 15: das Detail X von Figur 13 im vergrößerten Maßstab, nach der Fixierung des Sicherungselements,
- Figur 16: eine weitere Alternative der Ausgestaltung eines Sicherungselementes in Draufsicht,
- Figur 17: eine Draufsicht auf eine Kreuzgelenkgabel, bei der das Sicherungsele- ment gemäß Figur 16 eingesetzt ist,
- Figur 17a: ein Detail von Figur 17 im Schnitt,
- Figur 18: einen Halblängsschnitt einer Kreuzgelenkgabel mit einer Fixieranord- nung entsprechend einer zweiten erfindungsgemäßen Lösung, mit ei- nem sichelförmigen Sicherungselement,
- Figur 19: eine Draufsicht zu Figur 18,
- Figur 19a: ein Detail y von Figur 19 im vergrößerten Maßstab,
- Figur 20: einen Schnitt XX-XX gemäß Figur 19 als Detail, im vergrößerten Maß- stab,
- Figur 21: einen Schnitt XXI-XXI gemäß Figur 19 im vergrößerten Maßstab als Detail,
- Figur 22: eine Draufsicht auf eine Kreuzgelenkgabel mit einer Fixierungsanord- nung, die eine Alternative zu der gemäß Figuren 18 bis 20 im Rahmen der zweiten erfindungsgemäßen Lösung darstellt,
- Figur 23: das Detail Y gemäß Figur 22 im vergrößerten Maßstab,
- Figur 24: einen Halblängsschnitt durch eine Kreuzgelenkgabel gemäß einer wei- teren, nicht beanspruchten Lösung für die Fixierung einer Lagerbuchse, bei der eine Abstützung des Sicherungselements am Außenumfang der Lagerbuchse erfolgt,
- Figur 25: eine Draufsicht zu Figur 23,
- Figur 26: das Sicherungselement mit Haltevorsprüngen in Draufsicht und
- Figur 27: ein Detail von Figur 26 gemäß Schnittlinie XXVII-XXVII im vergrößerten Maßstab.

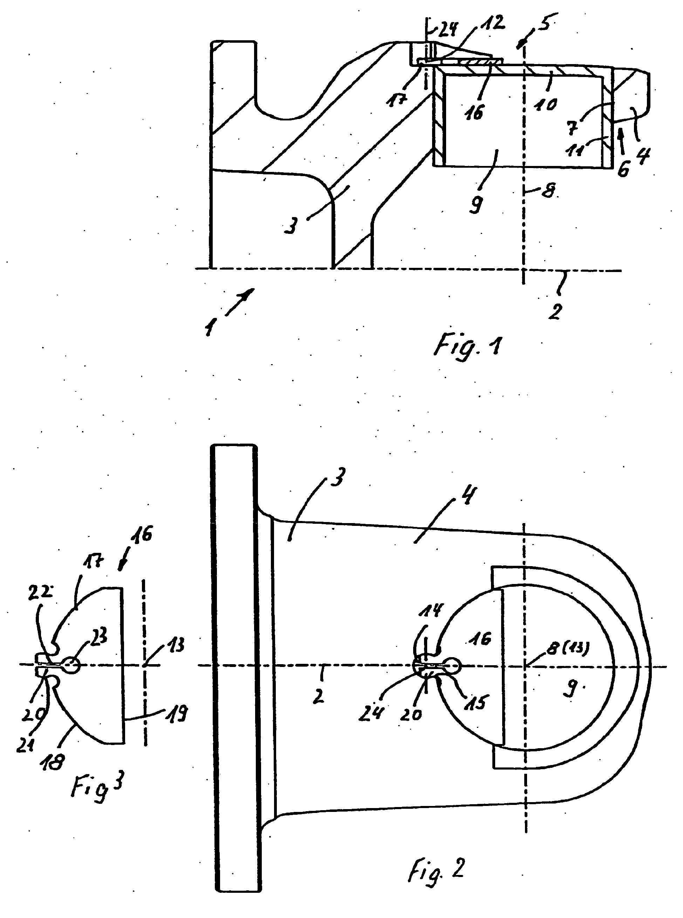

Nachfolgend wird zunächst die Ausgestaltung gemäß Figuren 1 bis 3 beschrieben, wobei bei der Beschreibung auf alle Zeichnungsfiguren 1 bis 3 gleichzeitig verwiesen wird.

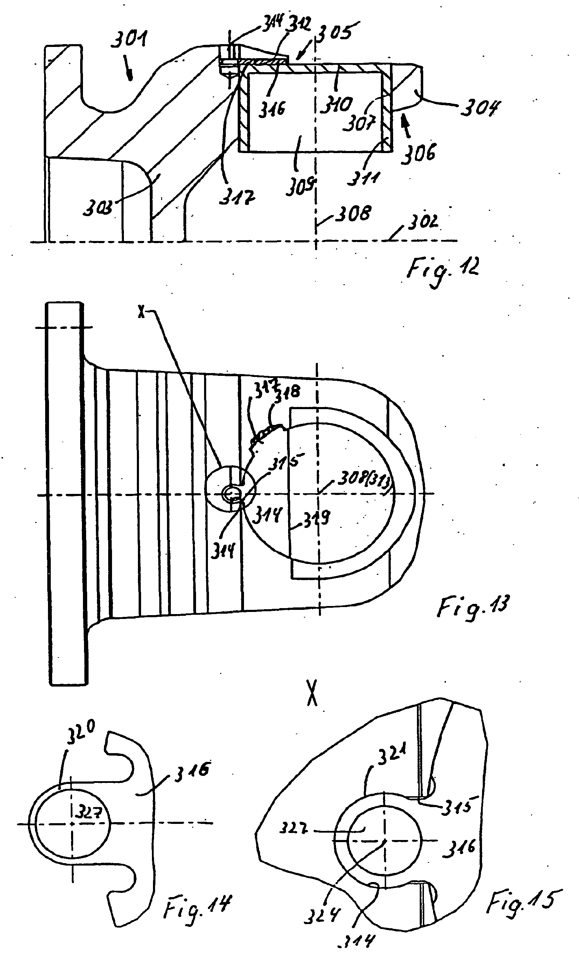

Die Figuren 1 - 17 und 24 -27 gehören nicht zur Erfindung; sie werden lediglich zum besseren Verständnis dargestellt.

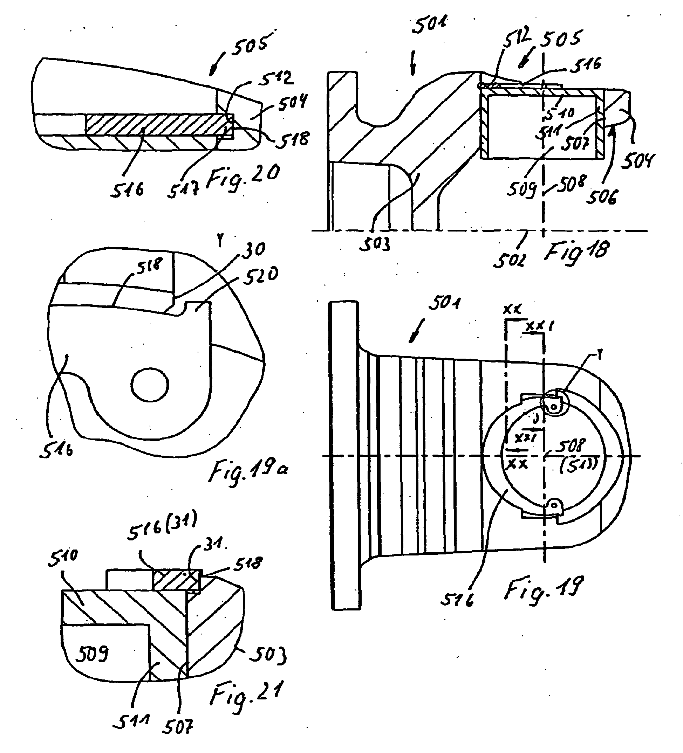

Die Figuren 18 - 21 zeigen eine erste Ausführungsform der Erfindung.

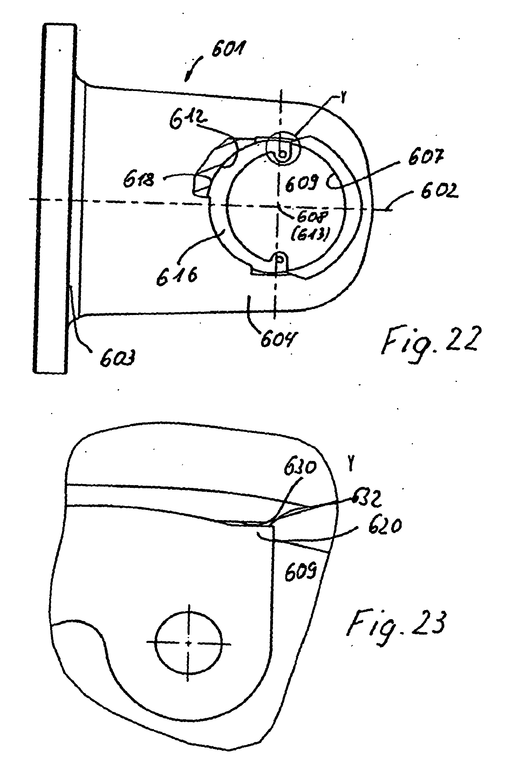

Die Figuren 22 und 23 zeigen eine zweite Ausführungsform der Erfindung.

Die Figuren 1 bis 3 stellen eine Kreuzgelenkgabel 1 dar, wobei in Figur 1 nur eine Hälfte der Kreuzgelenkgabel 1 ersichtlich ist, die Längsachse 2 stellt die Spiegelachse dar. Ausgehend von einer Gabelbasis 3 sind Gabelarme 4 vorgesehen, die diametral zur Längsachse 2 versetzt angeordnet sind und von der Gabelbasis 3 gleichgerichtet vorstehen. Der dargestellte Gabelarm 4 besitzt eine Außenseite, die der Längsachse 2 abgewandt ist und eine Innenseite 6, die der Längsachse 2 zugewandt ist. Zwischen der Außenseite 5 und der Innenseite 6 verläuft eine Lagerbohrung 7, die auf der Bohrungsachse 8 zentriert ist. Die Bohrungsachse 8 schneidet die Längsachse 2 rechtwinklig. Ein nicht dargestellter, aber diametral dem dargestellten Lagerarm 4 gegenüberliegender Gabelarm 4 besitzt ebenfalls eine Lagerbohrung 7. Diese ist auf der Verlängerung der Bohrungsachse 8 zentriert.

In der Lagerbohrung 7 ist eine Lagerbuchse 9 aufgenommen. Diese Lagerbuchse 9 ist zur Längsachse 2 hin einseitig offen und davon entfernt mit einem Buchsenboden 10 verschlossen. Sie umfasst eine Umfangswand 11, mit der sie in der Lagerbohrung 7 sitzt. Diese Lagerbuchse 9 dient zur Lagerung eines Lagerzapfens eines Zapfenkreuzes zur Verbindung zweier Kreuzgelenkgabeln zu einem Kreuzgelenk. In diesem Zusammenhang ist es erforderlich, die Lagerbuchse 9 in radialer Richtung bezüglich der Längsachse 2 zu sichern. Hierzu dient die erfindungsgemäße Fixierungsanordnung.

An der Außenseite 5 des Gabelarms 4 befindet sich eine Kreisbogennut 12, welche sich über einen Bogen von weniger als 180° um das Zentrum 13 erstreckt. Dieses Zentrum 13 fällt beim vorliegenden Ausführungsbeispiel mit der Bohrungsachse 8 zusammen. Es ist erkennbar, dass die Kreisbogennut 12 vor der Ebene, welche die Bohrungsachse 8 enthält und auf der die Längsachse 2 senkrecht steht, endet, und zwar von der Gabelbasis 3 aus gesehen.

Von der Lagerbohrung 7 geht in Richtung auf die Gabelbasis 3 zu in etwa zentriert auf einer Radialebene zu der Längsachse 2 eine Sicherungsausnehmung 14 aus, welche ausgehend von der Lagerbohrung 7 hinterschnitten ist. Die Sicherungsausnehmung 14 ist als kreiszylindrische Bohrung gestaltet und weist die Achse 24 auf. Dementsprechend ist ausgehend von der Lagerbohrung 7 der Durchlass 15 zur Sicherungsausnehmung 14 kleiner bemessen als der die Sicherungsausnehmung 14 bildende Bohrungsdurchmesser.

Zur axialen Sicherung der Lagerbuchse 9 in der Lagerbohrung 7 dient ein Sicherungselement 16, das als Scheibe gestaltet ist und insbesondere als Einzelteil aus Figur 3 ersichtlich ist. Dieses scheibenförmige Sicherungselement 16 weist einen Außenumfang 18 auf, der entsprechend der Kreisbogennut 12 kreisbogenförmig gestaltet ist. Der unmittelbar an den Außenumfang 18 anschließende Abschnitt bildet einen Eingriffsabschnitt 17, der in die Kreisbogennut 12 der Kreuzgelenkgabel 1 eintritt. Das Sicherungselement 16 weist darüber hinaus in Draufsicht im wesentlichen die Form eines Kreisabschnittes mit dem Außenumfang 18 und der Endfläche 19 auf. Von dem Außenumfang 18 steht ein Sicherungsabschnitt 20 vor, der in der in Figur 3 darstellten Draufsicht eine kreisförmige Umfangsfläche 21 besitzt, welche der Sicherungsausnehmung 14 angepasst ist. Ferner ist dieser Sicherungsabschnitt 20 durch einen zentralen Schlitz 22 in zwei Abschnitte unterteilt. Der Schlitz 22 endet in der Bohrung 23. Daraus folgt, dass die beiden Abschnitte aufeinander zu federn können, so dass beim Einschieben des Sicherungselementes 16 mit seinem Eingriffsabschnitt 17 entlang der Außenfläche des Buchsenbodens 10 in Richtung auf die Gabelbasis 3 auch der Sicherungsabschnitt 20 durch den Durchlass 15 in die dahinter befindliche Sicherungsausnehmung 14 eintritt. Die beiden beim Einschieben durch den Durchlass 15 aufeinander zu federnden Abschnitte des Sicherungsabschnittes 20 können wieder auseinander federn und sichern so das Sicherungselement 16 in zweifacher Hinsicht. Der Sicherungsabschnitt 20 in Verbindung mit der Sicherungsausnehmung 14 dient zur Axialsicherung des Sicherungselementes 16, so dass dieses nicht mit seinem Eingriffsabschnitt 17 die Kreisbogennut 12 verlassen kann und darüber hinaus auch gegen Drehung um das Zentrum 13. Das Zentrum 13 muss nicht mit der Bohrungsachse zusammen fallen, sondern kann auch in Richtung auf die Gabelbasis 3 versetzt auf der Längsachse 2 angeordnet sein.

Die Ausführungsform ist besonders kompakt und erlaubt eine einfache Montage und Demontage des Sicherungselementes 16. Wie insbesondere aus Figur 1 ersichtlich, sind die radialen Abmaße, gemessen über den Gabelarm 4, selbst dort noch gering, wo sich das Sicherungselement 16 befindet, so dass sich insgesamt ein kleiner Rotationskreis ergibt, d.h. es wird eine besonders kompakte Bauweise erzielt.

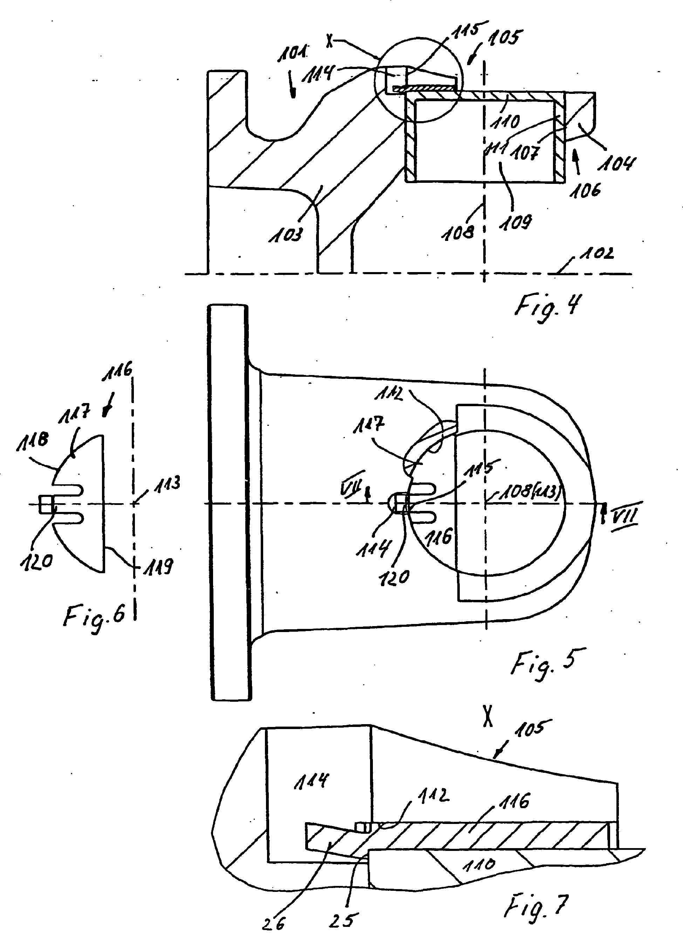

Nachfolgend wird anhand der Figuren 4 bis 6 für eine Variante zur Ausführungsform gemäß Figuren 1 bis 3 erläutert. Dabei sind für Bauteile oder Abschnitte von Bauteilen Bezugszeichen gewählt, welche zu denen vergleichbarer Bauteile und Abschnitte gemäß Figuren 1 bis 3 Zahlenwerte aufweisen, die um den Zahlenwert 100 zu den bei den Figuren 1 bis 3 erhöht sind. Nachfolgend werden nur die Unterschiede zu der Ausführungsform gemäß Figuren 1 bis 3 beschrieben. Bezüglich der Beschreibung der weiteren Teile wird auf die Beschreibung entsprechender Teile bei den Figuren 1 bis 3 verwiesen.

Abweichend zu der Gestaltung gemäß Figuren 1 bis 3 sind lediglich die Sicherungsausnehmung 114 und der Sicherungsabschnitt 120 des Sicherungselementes 116 ausgeführt. Die Sicherungsausnehmung 114 ist bei der Ausführung gemäß Figuren 4, 5 und 7 hinterschnittfrei gestaltet, d.h. der Sicherungsabschnitt 120, der in der Draufsicht annähernd als eine rechteckige Zunge gestaltet ist, kann, ohne dass weitere Maßnahmen erforderlich sind, um diese in die im wesentlichen abgerundet rechteckige oder zumindest mit zwei parallelen Flächen versehene Sicherungsausnehmung 114 durch den Durchlass 115 einführen zu können. Dies bedeutet, dass der Durchlass 115 sich im Querschnitt von der Lagerbohrung 107 aus gesehen nicht vergrößert. Die Sicherungsausnehmung 114 ist also hinterschnittfrei und ausgehend von der Außenseite 105 so tief in den Gabelarm 104 eingebracht, dass sie bis unter die Außenseite des Buchsenbodens 110 reicht und in diesem Bereich auch zur Lagerbohrung 107 offen ist.

Das Sicherungselement 116 weist einen zungenförmigen Sicherungsabschnitt 120 auf, der vom Zentrum 113 weg mit einer auf die Längsachse 102 zu gerichteten Nase 26 versehen ist. Diese Nase 26 greift hinter eine Haltekante 25, welche von der Außenfläche der Umfangswand 111 der Lagerbuchse 109 gebildet wird. Durch Einführen eines Werkzeuges unter den die Nase 26 aufweisenden Sicherungsabschnitt 120 kann dieser angehoben werden, so dass das Sicherungselement 116 von der Gabelbasis 103 weg außer Wirkverbindung zur Kreisbogennut 112 und der Sicherungsausnehmung 114 gebracht werden kann.

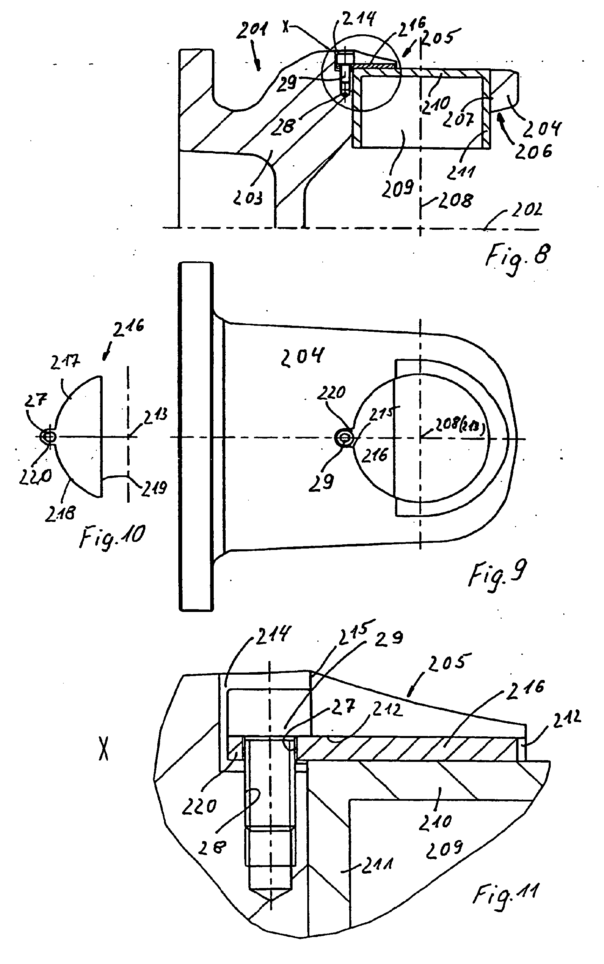

Bei der nachfolgenden Beschreibung der Ausführungsform gemäß Figuren 8 bis 11 erfolgt wiederum nur eine Beschreibung solcher Teile oder Abschnitte, die abweichend zur Ausführungsform gemäß Figur 1 gestaltet sind. Teile und Abschnitte, die denen von Figur 1 bis 3 entsprechen, sind nicht gesondert beschrieben, sondern zu deren Beschreibung wird auf die entsprechenden Bauteile und Abschnitte bei den Figuren 1 bis 3 verwiesen. Zur Erleichterung sind bei vergleichbaren Teilen und Abschnitten bei den Figuren 8 bis 11 Positionszahlen gewählt worden, die gegenüber denen vergleichbarer Teile und Abschnitte bei den Figuren 1 bis 3 um den Zahlenwert 200 erhöht sind.

Die Ausführungsform gemäß Figuren 8 bis 11 unterscheidet sich von der gemäß Figuren 1 bis 3 ebenfalls im wesentlichen durch die Gestaltung der Sicherungsausnehmung 214 und des Sicherungselementes 216 sowie der Fixierung desselben gegenüber der Kreuzgelenkgabel 201. Aus Figur 10 ist insbesondere erkenntlich, dass das Sicherungselement 216 ebenfalls als Scheibe gestaltet ist, d.h. im wesentlichen der Gestalt eines Kreisabschnittes entspricht, wobei zentral von dem Außenumfang 218 des Sicherungselementes 216 ein Sicherungsabschnitt vorsteht, der zentral mit einer Durchgangsbohrung 27 versehen ist. Entsprechend ist die Sicherungsausnehmung 214, in der der als Vorsprung gestaltete Sicherungsabschnitt 220 eingreift, wenn das Sicherungselement 216 so an der Kreuzgelenkgabel 201 montiert ist, gestaltet, so dass, wenn sein Außenumfang 218 und der daran anschließende Eingriffsabschnitt 217 in der Kreisbogennut 212 sitzen, er in Drehrichtung um das Zentrum 213 gehalten ist. Zusätzlich erfolgt noch eine Sicherung gegen Ausziehen außer Eingriff zur Kreisbogennut 212 dadurch, dass durch die Durchgangsbohrung 27 eine Schraube 29 hindurch in eine Gewindebohrung 28 anschließend an den Grund der Sicherungsausnehmung 214 eingeschraubt wird.

Nachfolgend wird eine weitere Gestaltung anhand der Zeichnungsfiguren 12 bis 15 näher beschrieben. Dabei werden ebenfalls nur die Unterschiede, die sich im Verhältnis zu der Ausführungsform gemäß Figuren 1 bis 3 ergeben, näher beschrieben.

Dabei sind den Figuren 1 bis 3 im wesentlichen entsprechende Bauteile und Abschnitte mit Bezugszahlen vorgesehen, die um den Zahlenwert 300 zu denen der Figuren 1 bis 3 erhöht sind. Zu deren Beschreibung wird auf die Beschreibung zu den Figuren 1 bis 3 verwiesen. Der Unterschied beruht im wesentlichen auf der Ausgestaltung des Sicherungselementes 316 und der Fixierung desselben in der Sicherungsausnehmung 314.

Die Sicherungsausnehmung 314 ist, ebenso wie bei der Ausführungsform gemäß Figuren 1 und 3 beschrieben, hinterschnitten gestaltet, so dass ausgehend von dem Durchlass 315 sich in Richtung zur Gabelbasis 303 eine Erweiterung ergibt. Durch diesen Durchlass 315 muss der Sicherungsabschnitt 320 des Sicherungselementes 316 eingeführt werden. Dieser Sicherungsabschnitt 320 ist ebenfalls in Form eines Vorsprunges gestaltet, der zentral eine Durchgangsbohrung 327 aufweist. Dabei sind der Außenumfang 321 und die Abmaße quer zur Längsachse 302 so gewählt, dass der Sicherungsabschnitt 320 beim Einschieben des Sicherungselementes 316 mit seinem Eingriffsabschnitt 317 in die Kreisbogennut 312 auch durch den Durchlass 315 hindurch passt. Anschließend erfolgt durch Einführen eines Aufweitwerkzeuges in die Durchgangsbohrung 327 ein Verformen des Sicherungsabschnittes 320 dergestalt, dass die Durchgangsbohrung 327 vergrößert wird und entsprechend der Außenumfang 321 so verändert wird, dass er sich der Kontur der Sicherungsausnehmung 314 anpasst. Hierdurch wird eine sichere, wenngleich ohne Zerstörung nicht lösbare Verbindung des Sicherungselementes 316 zur Kreuzgelenkgabel 301 erzielt. Die bisher beschriebenen Ausführungsformen gemäß Figuren 1 bis 11 sind alle so gestaltet, dass sie leicht lösbar sind, d.h. ohne dass eine Zerstörung eines der Bauteile erfolgen muss.

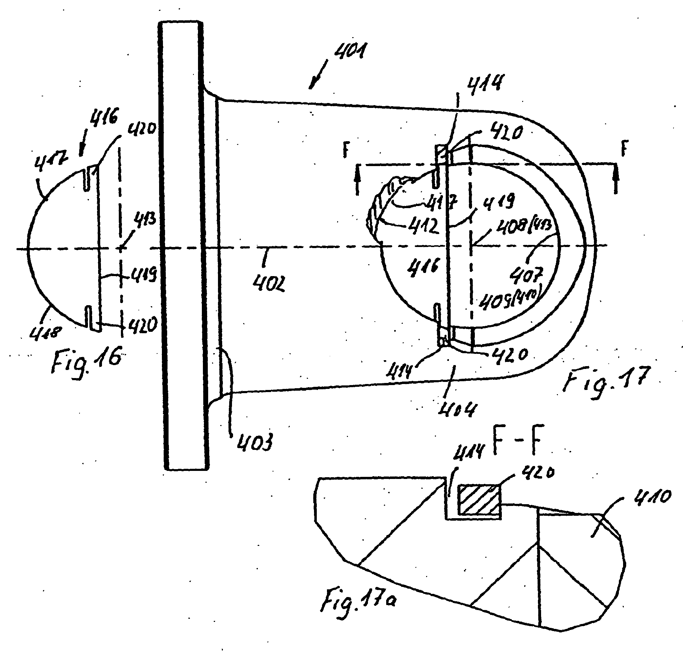

Die nachfolgend beschriebene Ausführungsform gemäß Figuren 16, 17 und 17a wird ebenfalls nur hinsichtlich der abweichenden Merkmale zu der Ausführungsform gemäß Figuren 1 bis 3 beschrieben. Bauteile und Abschnitte, die denen gemäß Figuren 1 bis 3 entsprechen, sind bei der Ausführungsform gemäß Figuren 16, 17 und 17a mit Positionszeichen versehen, die zu denen der Figuren 1 bis 3 um den Zahlenwert 400 erhöht sind. Zu deren Beschreibung wird auf die entsprechende Beschreibung bei den Figuren 1 bis 3 verwiesen. Während bei der Ausführungsform gemäß Figuren 1 bis 3 ein einziger und zentral auf der Längsachse zentrierter Sicherungsabschnitt vorgesehen war, sind bei der Gestaltung gemäß Figuren 16, 17 und 17a zwei Sicherungsabschnitte 420 vorgesehen, die zu der Endfläche 419 hin angeordnet sind und über den Außenumfang 418 des Sicherungselementes 416 vorstehen. Entsprechend sind bei der Kreuzgelenkgabel 401 zwei Sicherungsausnehmungen 414 vorgesehen, in die die Sicherungsabschnitte 420 eingreifen. Die Montage erfolgt dergestalt, dass zunächst die Sicherungsabschnitte 420 abgewinkelt sind, d.h. in Figur 16 aus der Zeichenebene heraus nach oben vorstehen würden. Erst nach der Montage erfolgt ein Umbiegen derselben, so dass sie in Eingriff zu den Sicherungsausnehmungen 420 gelangen können und sie dann die Position einnehmen, wie sie in den Figuren 16 und 17 dargestellt ist. Die beiden Sicherungsabschnitte 420 sorgen in Verbindung mit den Sicherungsausnehmungen 414 sowohl für eine axiale Halterung des Sicherungselementes 418 gegen Ausziehen aus der Kreisbogennut 412 als auch als Drehsicherung um das Zentrum 413, welches die Basis darstellt, um die der den Außenumfang 418 bildende Kreisbogen verläuft.

Bei der Fixierungsanordnung gemäß Figuren 18 bis 21 sind ebenfalls die Bauteile und Abschnitte, die denen bei den Figuren 1 bis 3 entsprechen, mit Positionszeichen versehen, die zu denen bei Figuren 1 bis 3 um den Zahlenwert 500 erhöht sind. Zu deren Beschreibung wird auf die Beschreibung zu den Figuren 1 bis 3 verwiesen. Nachfolgend werden jedoch die Abweichungen näher erläutert, die sich aus der abweichenden Gestaltung des Sicherungselementes 516 zu dem bei Figuren 1 bis 3 ergeben.

Das Sicherungselement 516 ist sichelförmig gestaltet. An den Enden der Kreisbogennut 512 sind über die Ebene, auf der die Längsachse 502 senkrecht steht und die Bohrungsachse 508 enthält, hinaus anschließend kreisbogenförmige Stützflächen 31 vorgesehen sind. An diese schließt sich ein dazu abgewinkelter Sicherungsanschlag 30 an, gegen den sich der Sicherungsabschnitt 520 des Sicherungselementes 520 anlehnen kann, so dass eine Drehsicherung gegeben ist. Die Auszugssicherung ist dadurch gegeben, dass die Stützflächen 31, an die sich das Sicherungselement 516 mit seinem Außenumfang 518 anlegt, über die zuvor definierte Ebene hinaus von der Gabelbasis 503 kreisbogenförmig geführt sind.

Es ist insbesondere aus Figur 19, 19a erkennbar, dass das Sicherungselement 516 mit seinen die Sicherungsabschnitte 520 in Form von Vorsprüngen aufweisenden Abschnitten über eine gedachte Ebene, die die Bohrungsachse 508 enthält und auf der die Längsachse 502 senkrecht steht, von der Gabelbasis 503 weg verlängert ist, so dass eine Auszug- und Drehsicherung für das Sicherungselement 516 gegeben ist.

Die Figuren 22 und 23 zeigen eine zu der Ausführungsform gemäß Figuren 18 bis 21 abgewandelte Ausführungsform, wobei Figur 22 eine Draufsicht auf einen Gabelarm 604 darstellt und Figur 23 das Detail Y im vergrößerten Maßstab darstellt. Im wesentlichen entspricht die Ausführungsform gemäß Figuren 22 und 23 hinsichtlich der Basisgestaltung der gemäß Figuren 1 bis 3, wobei für vergleichbare Bauteile und Abschnitte Positionszeichen gewählt sind, die zu denen bei den Figuren 1 bis 3 um den Zahlenwert 600 erhöht sind. Es ist erkennbar, dass das Sicherungselement 616 ebenfalls sichelförmig gestaltet ist. Dieses Sicherungselement 616 wird ebenfalls in einer Kreisbogennut 612 aufgenommen, die entsprechend Figuren 18 bis 21 über die die Bohrungsachse 608 enthaltende Ebene hinausgeführt wird, wobei jedoch anschließend an die Kreisbogennut 612 an der Kreuzgelenkgabel 601 in Richtung von der Gabelbasis 603 weg parallel zueinander und zur Längsachse 602 verlaufende Flächen die Anschläge 630 bilden. vorhanden. Entsprechend ist auch das Sicherungselement 616 an den Enden seines der Kreisbogennut 612 angepassten Abschnitts seines Außenumfangs 618 anschließend mit Verlängerungsabschnitten versehen, die parallel zur Längsachse 602 verlaufende Stützkanten 632 bilden. Mit diesen stützt sich das Sicherungselement 616 zur Drehsicherung an den Anschlägen 630 ab.

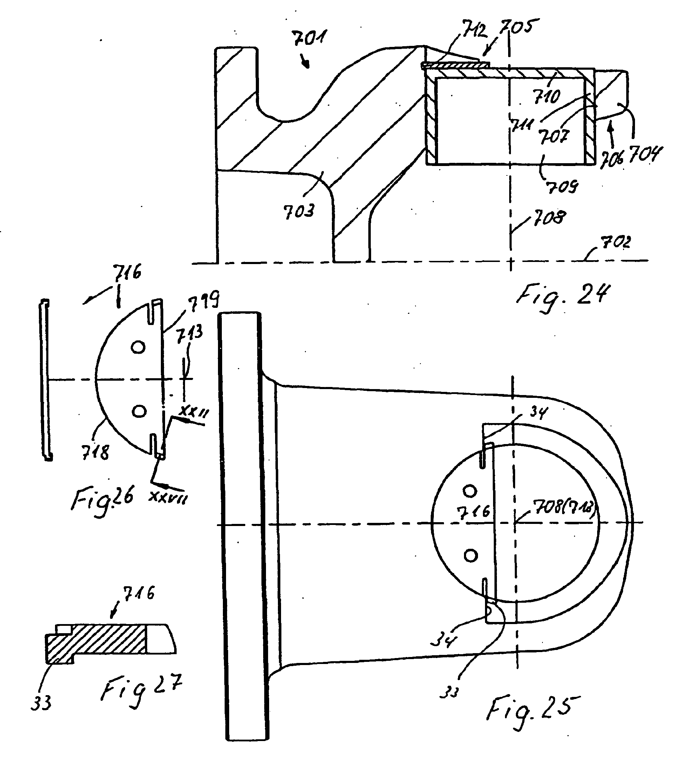

Eine letzte Ausführungsform ist in den Figuren 24 bis 26 dargestellt und wird nachfolgend anhand derselben näher erläutert. Dabei sind ebenfalls für Bauteile und Bauabschnitte, die denen bei der Ausführungsform gemäß Figuren 1 bis 3 vergleichbar sind, Positionszeichen vorgesehen, die um den Zahlenwert 700 zu denen bei den Figuren 1 bis 3 erhöht sind. Zu deren Beschreibung wird auf die Beschreibung zu den Figuren 1 bis 3 verwiesen.

Anders als dort ist das Sicherungselement 716 gestaltet, das zwar ebenfalls als einem Kreisabschnitt angenäherte Scheibe mit dem Außenumfang 718 und der Endfläche 719 gestaltet ist. Dieses weist jedoch zur Endfläche 719 hin an den Umfangsenden des Außenumfangs 718 anschließend Haltevorsprünge 33 auf, die entsprechend Figur 26 aus der Zeichenebene herausspringend verlaufen. Der die Kreisbogennut 712 aufweisende Abschnitt der Außenseite 705 der Kreuzgelenkgabel 701 endet an den Umfangsenden derselben mit Anlageflächen 34. Ferner ist im Zusammenhang mit Figur 26 erkennbar, dass die Haltevorsprünge 33 Abschnitte von Ärmchen sind, die nur teilweise mit dem Sicherungselement 716 verbunden sind, so dass die Haltevorsprünge 33 federn können. Bei der Montage des Sicherungselementes 716 erfolgt ein Einschieben desselben entlang des Buchsenbodens 710 in Richtung auf die Gabelbasis 703 zu, so dass der Außenumfang 718 in die Kreisbogennut 712 eintreten kann. Dabei stützen sich die Haltevorsprünge 33 noch auf dem Buchsenboden 710 ab und es erfolgt ein elastisches Verformen der diese an dem Sicherungselement 716 haltenden Abschnitte so, dass das Sicherungselement 716 mit seinem Außenumfang 718 in die Kreisbogennut 712 eintreten kann. Sobald ein Abschnitt der Lagerbuchse 709 erreicht wird, der vor der Ebene, welche die Bohrungsachse 708 enthält und auf der die Längsachse 702 senkrecht steht, gesehen vor der Gabelbasis 703 liegt, können, da der Buchsenboden 710 nicht mehr im Wege ist, die Haltevorsprünge 33 in Richtung zur Längsachse 702 elastisch zurückfedern und sich gegen den Außenumfang der Umfangswand 711 der Lagerbuchse 709 anlegen. Gleichzeitig legen sie sich auch gegen die Anlageflächen 34 an der Außenseite 705 der Kreuzgelenkgabel 701 an. Damit erfolgt einerseits eine Drehsicherung und andererseits eine Sicherung gegen Lösen des Sicherungselementes 716 aus der Kreisbogennut 712.

### Bezugszeichenliste

- 1, 101, 201, 301, 401, 501, 601, 701: Kreuzgelenkgabel
- 2, 102, 202, 302, 402, 502, 602, 702: Längsachse
- 3, 103, 203, 303, 403, 503, 603, 703: Gabelbasis
- 4, 104, 204, 304, 404, 504, 604, 704: Gabelarm
- 5, 105, 205, 305, 505, 605, 705: Außenseite
- 6, 106, 206, 306, 506, 706: Innenseite
- 7, 107, 207, 307, 407, 507, 607, 707: Lagerbohrung
- 8, 108, 208, 308, 408, 508, 608, 708: Bohrungsachse
- 9, 109, 209, 309, 409, 509, 609, 709: Lagerbuchse
- 10, 110, 210, 310, 410, 510, 710: Buchsenboden
- 11, 111, 211, 311, 511, 711: Umfangswand
- 12,112,212,312,412,512,612,712: Kreisbogennut
- 13, 113,213,313,413,513,613,713: Zentrum
- 14, 114, 214, 314, 414: Sicherungsausnehmung
- 15, 115, 215, 315: Durchlass
- 16, 116, 216, 316, 416, 516, 616, 716: Sicherungselement
- 17, 117,217,317,417,517: Eingriffsabschnitt
- 18, 118, 218, 318, 418, 518, 618, 718: Außenumfang
- 19, 119, 219, 319, 419, 719: Endfläche
- 20, 120, 220, 320, 420, 520, 620: Sicherungsabschnitt
- 21, 321: Umfangsfläche
- 22: Schlitz
- 23: Bohrung
- 24: Achse
- 25: Haltekante
- 26: Nase
- 27, 327: Durchgangsbohrung
- 28: Gewindebohrung
- 29: Schraube
- 30, 630: Sicherungsanschlag
- 31: Stützfläche

- 32 632: Stützkante
- 33: Haltevorsprung
- 34: Anlagefläche

## Patentansprüche

1. Fixierungsanordnung für Lagerbuchsen (509, 609) an einer Kreuzgelenkgabel (501, 601) umfassend
eine Kreuzgelenkgabel (501, 601) mit
- einer Gabelbasis (503, 603), die eine Längsachse (502, 602) bildet,
- zwei Gabelarmen (504, 604), die
- diametral von der Längsachse (502, 602) versetzt gleichgerichtet von der Gabelbasis (503, 603) vorstehen,
- jeweils eine durchgehende Lagerbohrung (507, 607) aufweisen, wobei die Lagerbohrungen (507, 607) beider Gabelarme (504, 604) auf einer gemeinsamen Bohrungsachse (508, 608) liegen, welche die Längsachse (502, 602) rechtwinklig schneidet,
- jeweils an einer der Längsachse (502, 602) abgewandten Außenseite (505) zur Gabelbasis (503, 603) hin versetzt, in einem Längsschnitt gesehen, der die Bohrungsachse (508, 608) enthält, und der Lagerbohrung (507, 607) zugewandt eine Kreisbogennut (512, 612) aufweisen,
- ein separates sichelförmiges Sicherungselement (516, 616) je Gabelarm (504, 604), das
- einen Eingriffsabschnitt (517, 617) mit einem Außenumfang (518, 618) aufweist, der der Kreisbogennut (512, 612) angepasst ist und in diese eingreift,
wobei das Zentrum (513, 613) der Kreisbogennut (512, 612) auf der Bohrungsachse (508, 608) liegt oder von dieser zur Gabelbasis (503, 603) hin versetzt ist,
wobei die Gabelarme (504, 506) jeweils mindestens einen Sicherungsanschlag (30, 630) an der Außenseite (505) aufweisen, der von einer gedachten Ebene, auf der die Längsachse (502) senkrecht steht und welche die Bohrungsachse (508) enthält, in Richtung von der Gabelbasis (503) weg versetzt ist, und
wobei jedes Sicherungselement (516, 616) je Sicherungsanschlag (30, 630) einen Sicherungsabschnitt (520, 620) aufweist, der sich am Sicherungsanschlag (30, 630) abstützt,
**dadurch gekennzeichnet,**
**dass** die Sicherungsabschnitte (520, 620) jeweils an den Enden des an die Kreisbogennut (512, 612) angepassten Eingriffsabschnitts (517, 617) jedes Sicherungselements (516, 616) gebildet sind.

2. Fixierungsanordnung nach Anspruch 1,
**dadurch gekennzeichnet,**
**dass** der Sicherungsabschnitt (520) des Sicherungselements (516) in Form eines Vorsprunges ausgebildet ist, der in Richtung von der Gabelbasis (503) weg den zugehörigen Sicherungsanschlag (30) hintergreift,
**dass** dem Sicherungsanschlag (30) eine Stützfläche (31) vorgeschaltet ist, die dem Verlauf der Kreisbogennut (512) über die gedachte Ebene hinaus bis zum Sicherungsanschlag (30) folgt.

3. Fixierungsanordnung nach Anspruch 1,
**dadurch gekennzeichnet,**
**dass** das Sicherungselement (616) an die Enden seines der Kreisbogennut (612) angepassten Abschnitts seines Außenumfangs (618) anschließend Verlängerungsabschnitte aufweist, die parallel zur Längsachse (602) verlaufende Stützkanten (632) bilden, welche sich an den die Sicherungsanschläge (630) darstellenden und zur Längsachse (602) parallelen und auf die Enden der Kreisbogennut (612) folgenden Flächen abstützen.

4. Fixierungsanordnung nach Anspruch 2,
**dadurch gekennzeichnet,**
**dass** der Sicherungsanschlag (30) durch eine von der auf die Lagerbohrung (507) weggerichtete Stufenfläche gebildet ist.

## Claims

1. A fixing assembly for bearing bushes (509, 609) at a universal joint yoke (501, 601), comprising a universal joint yoke (501, 601) with
- a yoke base (503, 603) which forms a longitudinal axis (502, 602)
- two yoke arms (504, 604)
- which are diametrically offset from the longitudinal axis (502, 602) and project from the yoke base (503, 603) so as to extend in the same direction,
- which each comprise a through-hole bearing bore (507, 607), wherein the bearing bores (507, 607) of both yoke arms (504, 604) are positioned on a common bore axis (508, 608) which intersects the longitudinal axis (502, 602) at right angles,
- which, on an outer face (505) facing away from the longitudinal axis (502, 602), are offset towards the yoke base (503, 603), if viewed in a longitudinal section containing the bore axis (508, 608) and which comprise a circular-arch shaped groove (512, 612) which faces the bearing bore (507, 607),
- a separate sickle-shaped securing element (516, 616) per joke arm (504, 604)
which comprises an engageable portion (517, 617) with an outer circumference (518, 618) which his adapted to the circular-arch-shaped groove (512, 612) and engages same;
wherein the centre (513, 613) of the circular-arch-shaped groove (512, 612) is positioned on the bore axis (508, 608) or is offset from same towards the yoke base (503, 603);
wherein the yoke arms (504, 506), at the outer face (505), each comprise at least one securing stop (30, 630) which is offset in the direction away from an imaginary plane on which the longitudinal axis (502) is positioned perpendicularly and which contains the bore axis (508;
and wherein each securing element (516, 616), per securing stop ((30, 630),comprises a securing portion (520, 620) which is supported on the securing stop (30, 630);
**characterised in**
**that** the securing portions (520, 620) are each formed at the ends of the engageable portion (517, 617) of each securing element (516, 616), which engageable portion (517, 617) is adapted to the circular-arch-shaped groove (512, 612).

2. A fixing assembly according to claim 1,
**characterised in**
**that** the securing portion (520) of the securing element (516) is provided in the form of a projection which, in the direction away from the yoke base (503), engages from behind the associated securing stop (30), and
**that** in front of the securing stop (30) there is connected a supporting face (31) which follows the course taken by the circular-arched-shaped grove (512) along and beyond the imaginary pane as far as the securing stop (30).

3. A fixing assembly according to claim 1,
**characterised in**
**that** the securing element (616) comprises extension portions at the ends of its portion of the outer circumference (618), which portion is adapted to the circular-arch-shaped groove (612), which extension portions form supporting edges (632) which extend parallel to the longitudinal axis (602) and which are supported on the faces which constitute the securing stops (630), which extend parallel to the longitudinal axis (602) and which follow the ends of the circular-arch-shaped groove (612).

4. A fixing assembly according to claim 2,
**characterised in**
**that** the securing stop (30) is formed by a step face which faces away from the bearing bore (507).

## Revendications

1. Agencement de fixation pour des coussinets (509, 609) sur une fourche de joint de cardan (501, 601) comprenant
une fourchette de joint de cardan (501, 601) avec
- une base de fourche (503, 603), qui forme un axe longitudinal (502, 602),
- deux bras de fourche (504, 604) qui
- dépassent de la base de fourche (503, 603) dirigée dans le même sens, diamétralement décalée par rapport à l'axe longitudinal (502, 602),
- présentent chacun un alésage de palier (507, 607) continu, les alésages de palier (507, 607) des deux bras de fourche (504, 604) étant situés sur un axe de perçage (508, 608) commun, qui coupe à angle droit l'axe longitudinal (502, 602),
- présentent chacun une rainure en arc de cercle (512, 612), sur un côté extérieur (505), opposée à l'axe longitudinal (502, 602), décalée en direction de la base de fourche (503, 603), vue dans une coupe longitudinale, qui contient l'axe de perçage (508, 608), et tournée vers l'alésage de palier (507, 607),
- un élément de blocage (516, 616) séparé en forme de croissant par bras de fourche (504, 604), lequel
- présente une partie d'engagement (517, 617) avec un pourtour extérieur (518, 618), lequel est adapté à la rainure en arc de cercle (512, 612) et s'engage dans celle-ci,
le centre (513, 613) de la rainure en arc de cercle (512, 612) étant situé sur l'axe de perçage (508, 608) ou étant décalé à partir de cet axe en direction de la base de fourche (503, 603),
les bras de fourche (504, 506) présentant chacun au moins une butée de blocage (30, 630) sur le côté extérieur (505), qui est décalée par rapport à un plan imaginaire, sur lequel l'axe longitudinal (502) est vertical et qui contient l'axe de perçage (508), en partant de la base de fourche (503) et
chaque élément de blocage (516, 616) présentant par butée de blocage (30, 630) une partie de blocage (520, 620) qui s'appuie sur la butée de blocage (30, 630),
**caractérisé en ce que**
les parties de blocage (520, 620) sont formées chacune sur les extrémités de la partie d'engagement (517, 617), adaptée à la rainure en arc de cercle (512, 612), de chaque élément de blocage (516, 616).

2. Agencement de fixation selon la revendication 1,
**caractérisé en ce que**
la partie de blocage (520) de l'élément de blocage (516) est conçue sous la forme d'une partie saillante qui, en partant de la base de fourche (503), enserre de l'arrière la butée de blocage (30) associée, **en ce qu'**une surface d'appui (31), qui suit le tracé de la rainure en arc de cercle (512) au-delà du plan imaginaire jusqu'à la butée de blocage (30), est montée en amont de la butée de blocage (30).

3. Agencement de fixation selon la revendication 1,
**caractérisé en ce que**
l'élément de blocage (616) présente à la suite des extrémités de sa partie, adaptée à la rainure en arc de cercle (612), de son pourtour extérieur (618) des parties de prolongement qui forment des arêtes d'appui (632) agencées parallèlement à l'axe longitudinal (602), qui s'appuient sur les surfaces qui représentent les butées de blocage (630), sont parallèles à l'axe longitudinal (602) et suivent les extrémités de la rainure en arc de cercle (612).

4. Agencement de fixation selon la revendication 2,
**caractérisé en ce que**
la butée de blocage (30) est formée par une surface en gradins dirigée sur le perçage de palier (507).
